Europäisches Patentamt

European Patent Office

Office européen des brevets

(19)

(11) Publication number: **0 402 595**
**A2**

# EUROPEAN PATENT APPLICATION

(12)

(21) Application number: **90107751.1**

(22) Date of filing: **24.04.90**

(51) Int. Cl.5: **B60C 11/04, B60C 11/03**

(30) Priority: **14.06.89 US 365997**

(43) Date of publication of application:
**19.12.90 Bulletin 90/51**

(84) Designated Contracting States:
**AT BE CH DE DK ES FR GB GR IT LI LU NL SE**

(71) Applicant: **The Uniroyal Goodrich Tire Company**
**600 South Main Street**
**Akron Ohio 44397-0001(US)**

(72) Inventor: **Killian, Laurie W.**
**2452 Fourth Street**
**Cuyahoga Falls, Ohio(US)**
Inventor: **Hinds, Tari L.**
**37835 Woodridge, Apt. 206**
**Westland, Michigan(US)**

(74) Representative: **Selting, Günther, Dipl.-Ing. et al**
**Patentanwälte von Kreisler, Selting, Werner**
**Deichmannhaus am Hauptbahnhof**
**D-5000 Köln 1(DE)**

(54) **Tread for a race tire.**

(57) A tread for a tire having an axis of rotation and an equatorial plane. The tread comprises a plurality of tread elements for contacting a surface. A groove network separates the plurality of tread elements. The groove network includes a pair of axially spaced apart continuous first circumferential grooves located entirely on a first side of the equatorial plane and a pair of axially spaced apart continuous second circumferential grooves located entirely on a second side of the equatorial plane opposite the first side. Each of the first circumferential grooves has a first depth taken in a direction extending radially of the axis of rotation and a first width taken in a direction perpendicular to the first depth in a plane extending radially of the axis of rotation. Each of the second circumferential grooves has a second depth taken in a direction extending radially of the axis of rotation and a second width taken in a direction perpendicular to the second depth in a plane extending radially of the axis of rotation. The second width is at least 1.5 times the first width.

Fig.3

# TREAD FOR A RACE TIRE

## BACKGROUND OF THE INVENTION

### Field of the Invention

The present invention relates to a pneumatic tire. In particular, the present invention relates to a race tire having an improved tread configuration suitable for use on dry and wet track surfaces.

### Description of the Prior Art

A race tire for use exclusively on a dry track surface typically has no tread pattern. That is, grooves extend across the track surface contacting portion of the tire. The non-grooved tire provides maximum surface contacting area for good traction on a dry track. Such a non-grooved tire is susceptible to hydro- planing when used on a wet track surface. Thus, during wet track conditions, a tire is used which has a tread pattern including grooves. The grooves permit water to escape from between the tire footprint and the track surface to prevent hydroplaning.

During a relatively long duration race, it is inconvenient to change between grooved and non-grooved tires during changing weather conditions because time may be lost. Thus, a race tire for use on wet and dry track surfaces has been developed. U.S. Patent No. 4,456,046 discloses such a race tire. The tire disclosed in U. S. Patent No. 4,456,046 includes a directional tread pattern having a plurality of tread elements which are separated by a network of grooves. The depth of each transverse groove of the groove network progressively increases as the transverse groove extends from the edge of the tire toward the mid-circumferential plane of the tire. The relatively short elements at the axial edges of the tread prevent "squirming" of the elements during a turn on dry pavement.

## SUMMARY OF THE INVENTION

The present invention is directed to a tread for a race tire which is suitable for use on wet and dry track surfaces. The tread embodying the present invention is asymmetrical and provides excellent dry handling and improved wet traction characteristics.

The tread is for use on a vehicle tire which has an axis of rotation and an equatorial plane. The tread comprises a plurality of tread elements for contacting a track surface. A groove network separates the plurality of tread elements. The groove network includes a pair of axially spaced apart first circumferential grooves located entirely on a first side of the equatorial plane and a pair of axially spaced apart second circumferential groove located entirely on a second side of the equatorial plane opposite the first side. Each of the first circumferential grooves has a depth taken in a direction radially of the axis of rotation and a first width taken perpendicular to the depth in a plane extending radially of the axis of rotation. The second circumferential groove has a depth taken in a direction radially of the axis of rotation and has a second width taken perpendicular to the depth in a plane extending radially of the axis of rotation. The second width is at least 1.5 times the first width. The depth of the axially innermost circumferential grooves is at least 1.25 times the depth of said axially outermost circumferential grooves.

The tread has an overall width for contacting the track surface. A first circumferential band portion of the tread extends axially inward from the tread edge on the first side for a distance which is 20 percent of the overall tread width. The first circumferential band portion has a void ratio less than 15 percent. The void ratio is defined as the total area in the circumferential band portion less the surface area of the track contacting tread elements in the circumferential band portion divided by the total area of the circumferential band portion. A second circumferential band portion of the tread extends axially inward from the tread edge on the second side for a distance which is 20 percent of the overall tread width. The second circumferential band portion has a void ratio greater than 28 percent. The void ratio within 20 percent of the equatorial plane on the first side is less than 23 percent. The void ratio within 20 percent of the equatorial plane on the second side is greater than 27 percent.

## BRIEF DESCRIPTION OF THE DRAWINGS

Further features of the present invention will become apparent to those skilled in the art to which the present invention relates from reading the following specification with reference to the accompanying drawings, in which:

Fig. 1 is a plan view of a portion of a tire having a tread embodying the present invention;

Fig. 2 is a cross sectional view of the tire in Fig. 1 taken approximately along line 2-2 in Fig. 1; and

Fig. 3 is an enlarged cross sectional view of the tread in Fig. 1, taken approximately along 3-3 in Fig. 1.

## DESCRIPTION OF A PREFERRED EMBODIMENT

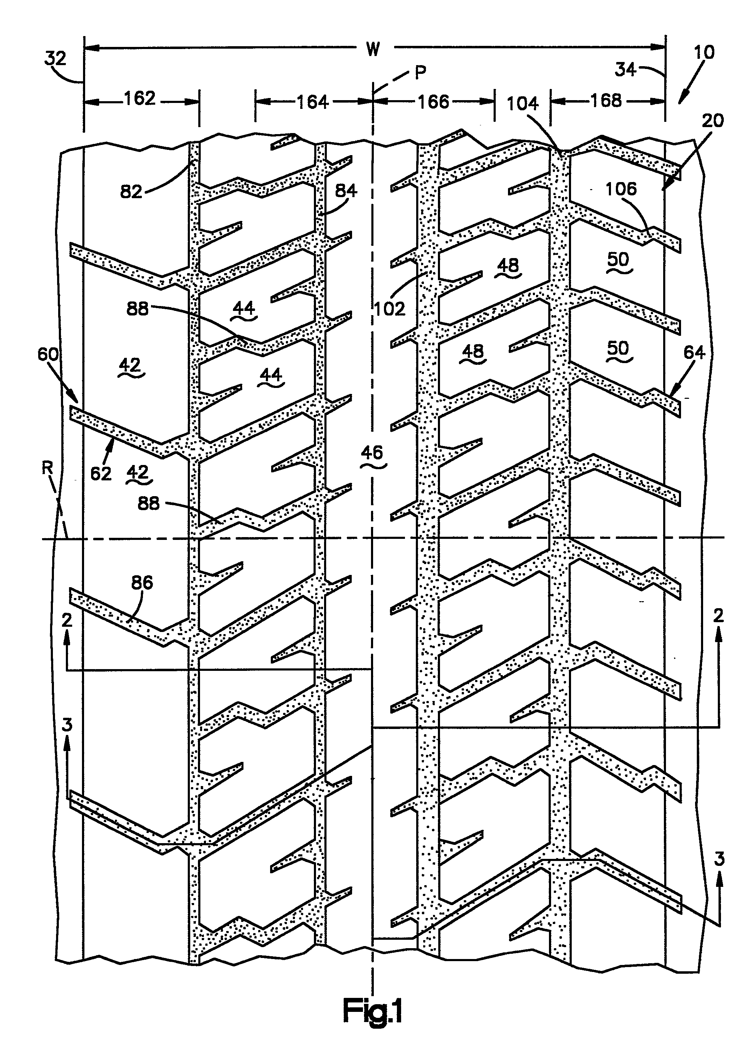

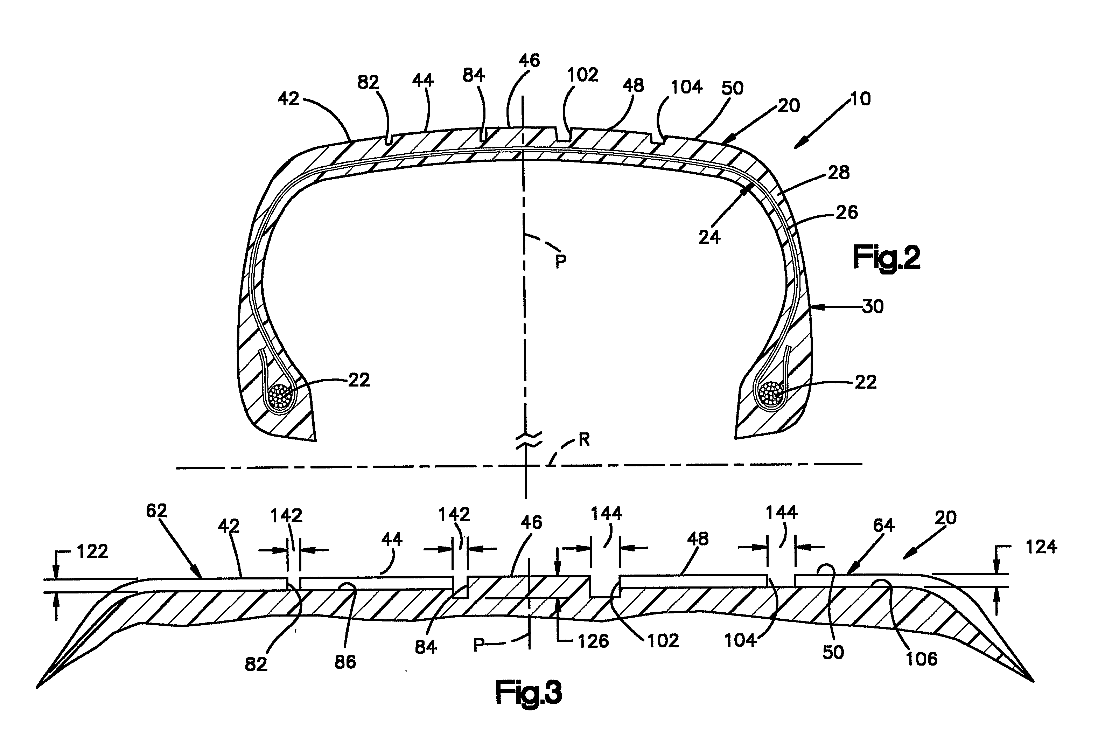

A tire 10 (Figs. 1 and 2) having a non-directional tread embodying the present invention is particularly suitable for use as a race tire on dry or wet track surfaces. The tire 10 is formed in a generally torroidal configuration. The tire 10 has a longitudinal central axis R about which the tire rotates. The tire 10 is bisected by an equatorial plane P extending perpendicular to the axis R. It will be understood that the term "axially" as used herein shall mean in a direction parallel to the axis R.

The tire 10 includes a pair of circular and substantially inextensible beads 22 (Fig. 2) which are spaced apart axially. A carcass 24 including at least one ply extends between the beads 22. Preferably, each ply comprising the carcass 24 contains a plurality of reinforcing fibers 26 each of which is contained in a plane extending between 70 to 90 degrees relative to the equatorial plane P and intersecting the axis R. The reinforcing fibers 26 may be of any suitable material such as polyester, nylon, aramid or steel. The tire 10 also includes an elastomeric material 28 forming the tread 20 and a sidewall 30. The elastomeric material 28 may be any suitable natural or synthetic rubber.

The tread 20 has an overall width in (Fig. 1) for contacting the surface of a track. The overall width W of the tread 20 is defined by the axial limits or tread edges 32, 34 of the tire 10. The tread 20 includes a plurality of surface contacting tread elements 42, 44, 46, 48 and 50. The tread elements 42, 44, 46, 48, 50 are separated by a groove network 60 including a first groove system 62 and a second groove system 64. The first groove system 62 is located entirely on the left side of the equatorial plane P, as viewed in Fig 1. The second groove system 64 is located entirely on the right side of the equatorial plane P, as viewed in Fig. 1.

The tread elements 42 and 44 are located entirely on the left side of the equatorial plane P, as illustrated in Fig. 1. The tread elements 48 and 50 are located entirely on the right side of the equatorial plane P. The tread elements 44, 48 are generally Y-shaped. The tread element 46 is a continuous circumferential rib which is bisected by the equatorial plane P. The rib 46 typically is the location of highest contact pressure of the tire 10 during its operation.

The first groove system 62 includes a pair of continuous circumferential grooves 82, 84. The groove 84 defines the leftmost axially limit of the rib 46. The first groove system 62 also includes a plurality of transversely extending grooves 86 and 88 which define the shoulder tread elements 42 at the tread edge 32 and the tread elements 44 between the tread elements 42 and rib 46. The second groove system 64 includes a pair of circumferential continuous grooves 102 and 104. The groove 102 defines the rightmost axially limit of the circumferential rib 46. The second groove network 64 also includes a plurality of transversely extending grooves 106. The grooves 106 define a predetermined number of the shoulder tread elements 50 at the tread edge 34 and the tread elements 48 located between the tread elements 50 and rib 46. The number of tread elements 50 is substantially twice the number of tread elements 42. This means that the number of transverse grooves 106 is substantially twice the number of transverse grooves 86.

The tire 10 is intended to be mounted on a vehicle so the shoulder tread elements 42 are located on the outside of the vehicle. Thus, the shoulder tread elements 50 are intended to be located on the inside of the vehicle. Each shoulder tread element 42 has a contact area which is at least twice the contact area of any two adjacent shoulder tread elements 50. The relatively large contact area of the shoulder tread elements 42 results in good handling characteristics during a turn of the vehicle operating on a dry track surface because a majority of the cornering load is realized at the outside of the tire.

Excellent wet traction characteristics are also provided by the tread 20 embodying the present invention. Hydroplaning is prevented by the second groove system 64 intended to be located on the inside of the vehicle. The relatively wide grooves 102, 104 of the second groove system 64 enable a relatively large volume of water to be conducted away from between the tread 20 and a wet track surface. The tread elements 42, 44, 46, 48, 50 are illustrated in Fig. 3 as being planar as would be encountered when the tread portion engages a flat track surface portion.

The grooves 82, 86, 88 of the first groove system 62, as illustrated in Fig. 3, have an average depth 122 which is preferably 0.125 inch. The depth 122 is defined as the distance extending radially of the axis R from the innermost surface or bottom of the groove 86, as illustrated in Fig. 3, to the top of the tread elements 42, 44, 46. The grooves 104, 106 of the second groove system 64 have an average depth 124 which is equal to the depth 122 of 0.125 inch. This provides for relatively short and stable tread elements 42, 50 located at the tread edges 32, 34 for optional handling on a dry track surface. The relatively short tread element 42 also resists heat buildup due to "squirming" during turns.

The circumferential grooves 84, 102 located closest to the equatorial plane P has an average depth 126 of at least 1.25 times the depth of the axially outermost circumferential grooves 82, 104. Thus, the depth 126 is preferably 0.188 inch. The relatively deep grooves 84, 102 near the center of the width in of the tread 20 permits a relatively large volume of water to escape from between the tread elements 44, 46, 48 and a track surface to prevent hydroplaning.

The circumferential grooves 82, 84 (Fig. 3) on the left side of the equatorial plane each have a nominal width 142. The widths 142 of the grooves 82, 84 are substantially equal. Preferably the width is at least 0.095 inch.

The circumferential grooves 102, 104 have a width 144 which is at least 1.5 times the width 142 of the grooves 82, 84. The widths 142, 144 of the grooves 82, 84, 102, 104 is taken in a direction perpendicular to the depth 122, 124 in a plane extending radially of the axis of rotation R of the tire 10. Preferably, the width 144 of the grooves 102, 104 is .190 inch which is twice the width 142 of the grooves 82, 84. Thus, during wet track conditions, a relatively larger amount of water may accumulate and be removed from the groove system 64 than the groove system 62. The tire 10 having a tread 20 embodying the present invention provides excellent handling on a dry surface and prevents hydroplaning during wet track conditions.

As illustrated in Fig. 1, the tread 20 has several repeating circumferential bands 162, 164, 166, 168 extending around the entire circumference of the tire 10. The length of the tread elements 42, 44, 48, 50 taken in a direction parallel to the equatorial plane P vary between adjacent tread elements in a circumferential direction in order to minimize noise. Each of the circumferential bands 162, 164, 166, 168 have a separate and distinct void ratio. The void ratio of a circumferential band is defined as the non-contacting surface area within the circumferential band divided by the entire included area of the circumferential band. The non-contacting surface area is the total area of the circumferential band less the area of the tread elements in the circumferential band.

The circumferential band 162 extends for a distance which is 20 percent of the overall tread width in axially inward from the tread edge 32 toward the equatorial plane P. The circumferential band 164 extends for a distance which is 20 percent of the width in axially to the left of the equatorial plane P toward the tread edge 32. The circumferential band 166 extends for a distance which is 20 percent of the width W to the right of the equatorial plane P toward the tread edge 34. The circumferential band 168 extends for a distance which is 20 percent of the width in of the tread 20 axially inwardly to the left of the tread edge 34 toward the equatorial plane P.

The void ratio of the circumferential band 162 is less than 15 percent and is preferably approximately 13.5 percent. The void ratio of the circumferential band 168 is greater than 28 percent and is preferably at least 30 percent. The void ratio of the circumferential band 164 is less than 23 percent and is preferably approximately 21 percent. The circumferential band 166 has a void ratio which is greater than 27 percent and is preferably at least 29 percent.

Thus, it will be apparent that because the groove system 64 has a relatively larger width circumferential grooves 102, 104 and a larger number of transverse grooves than the groove system 62, a relatively large amount of water may escape from between a road surface and the portion of the tire 10 located toward the inside of the vehicle. The relatively larger contact area of the tread elements 42 being located to the outside of the vehicle provides excellent handling characteristics during a turn on a dry track surface.

From the above description of a preferred embodiment of the invention, those skilled in the art will perceive improvements, changes and modifications. Such improvements, changes and modifications within the skill of the art are intended to be covered by the appended claims.

## Claims

1. A tread for a tire having an axis of rotation and an equatorial plane, said tread comprising:
   a plurality of tread elements for contacting a surface;
   a groove network separating said plurality of tread elements, said groove network including a pair of axially spaced apart continuous first circumferential grooves located entirely on a first side of the equatorial plane and a continuous second circumferential grooves located entirely on a second side of the equatorial plane opposite said first side;
   each of said first circumferential grooves having a depth taken in a direction extending radially of the axis of rotation and a first width taken in a direction perpendicular to said depth in a plane extending radially of the axis of rotation; and
   each of said second circumferential grooves having a depth taken in a direction extending radially of the axis of rotation and a second width taken in a direction perpendicular to said depth in a plane extending radially of the axis of rotation;
said second width being at least 1.5 times said first width.

2. The tread set forth in claim 1 wherein one of said plurality of tread elements comprises a continuous circumferential rib bisected by the equatorial plane of the tire.

3. The tread set forth in claim 1 further including a first predetermined number of transverse grooves located on said first side for communication with said first circumferential groove and a second predetermined number of transverse grooves located on said second side for communication with said second circumferential groove, said second predetermined number being substantially two times said first predetermined number.

4. The tread set forth in claim 1 wherein said second width is substantially 2.0 times said first width.

5. The tread set forth in claim 1 wherein the depth of the axially innermost of said first and second circumferential grooves being at least 1.25 times the depth of the axially outermost of said first and second circumferential grooves taken in a direction radially of the axis of rotation.

6. The tread set fourth in claim 5 wherein the depth of the axially innermost of said first and second circumferential grooves is substantially 1.5 times the depth of the axially outermost of said first and second circumferential grooves.

7. A tread for a tire having an axis of rotation, an equatorial plane and a surface contacting width extending between a pair of axially spaced apart tread edges, said tread comprising:
a first circumferential band portion located a distance of 20 percent of the surface contacting width axially inward from a tread edge on a first side of the equatorial plane, said first circumferential band portion including a plurality of surface contacting elements having a void ratio less than 15 percent, the void ratio being defined as the surface noncontacting area in the circumferential band portion divided by the total surface area in the circumferential band portion;
a second circumferential band portion located a distance of 20 percent of the surface contacting width axially inward from a tread edge on a second side of the equatorial plane opposite the first side, said second end portion including a plurality of surface contacting elements having a void ratio greater than 28 percent;
a first groove network defining said elements on said first side, said first groove network including an axially outer circumferential groove having a first depth taken in a direction radially of the axis of rotation and an axially inner circumferential groove having a second depth taken in a direction radially of the axis of rotation; and

a second groove network defining said elements on said second side, said second groove network including an axially outer circumferential groove having a depth taken in a direction radially of the axis of rotation which is substantially equal to said first depth and an axially inner circumferential groove having a depth taken in a direction radially of the axis of rotation which is substantially equal to said second depth;
said second depth being at least 1.25 times said first depth.

8. The tread set forth in claim 7 wherein said second depth is substantially 1.5 times said first depth.

9. The tread set forth in claim 7 further including a continuous circumferential surface contacting element bisected by the equatorial plane, and in which the void ratio within a distance of 20 percent of the surface contacting width of the equatorial plane on said first side is less than 23 percent and the void ratio within a distance of 20 percent of the surface contacting width on said second side of the equatorial plane is greater than 27 percent.

10. The tread set forth in claim 7 said axially inner circumferential groove located on said first side of said circumferential rib has a first width taken in a direction perpendicular to said second depth in a plane extending radially of the axis of rotation and said axially inner circumferential groove located on said second side has a second width taken in a direction perpendicular to said second depth in a plane extending radially of the axis of rotation, said second width being at least l.S times said first width.

11. The tread set forth in claim 10 wherein said second width is substantially 2.0 times said first width.

12. A tread for a tire having an axis of rotation and an equatorial plane, said tread comprising:
a plurality of tread elements for contacting a surface;
a first groove network defining said tread elements on a first side of the equatorial plane, said first groove network including an axially outer circumferential groove having a first depth taken in a direction radially of the axis of rotation and an axially inner circumferential groove having a second depth taken in a direction radially of the axis of rotation; and
a second groove network defining said tread elements on a second side of the equatorial plane, said second groove network including an axially outer circumferential groove having a depth taken in a direction radially of the axis of rotation which is substantially equal to said first depth and an axially inner circumferential groove having a depth taken in a direction radially of the axis of rotation which is substantially equal to said second depth;

each of said outer circumferential grooves having a first width taken in a direction perpendicular to said first depth in a plane extending radially of the axis of rotation;

each of said inner circumferential grooves having a second width taken in a direction perpendicular to said second depth in a plane extending radially of the axis of rotation;

said second depth being substantially 1.25 times said first depth and said second width being at least 1.5 times said first width.

13. The tread set forth in claim 12 wherein one of said plurality of tread elements comprises a continuous circumferential rib bisected by the equatorial plane of the tire.

14. The tread set forth in claim 12 wherein said second depth is about 1.5 times said first depth and said second width is about 2.0 times said first width.

15. The tread set forth in claim 12 wherein said second depth is substantially 1.5 times said first depth.

16. The tread set forth in claim 12 further including a first predetermined number of transverse grooves located on said first side for communication with said circumferential grooves on said first side and a second predetermined number of transverse grooves located on said second side for communication with said circumferential grooves on said second side, said second predetermined number being substantially two times said first predetermined number.

**Fig.1**

**Fig.2**

**Fig.3**